# EUROPEAN PATENT APPLICATION

(11) **EP 1 014 283 A1**
(43) Date of publication of application: **28.06.2000**
(21) Application number: 99310224.3
(22) Date of filing: 17.12.1999
(51) Int. Cl.: G06F 17/30

(54) **Intranet-based cataloguing and publishing system and method**

(30) Priority: 17.12.1998 US 213228
(71) Applicant: Picom Software System Ltd., Ramat-Gan 52232 (IL)
(72) Inventor: Zion, Evgeny, North York, Ontario M2R 1B8 (CA); Anchel, Raul, Tel-Aviv 69361 (IL)
(74) Representative: Charig, Raymond Julian

(57) **Abstract**

A cataloguing system includes a manager, a cross-referencer, and a publisher. The manager enables a system administrator to catalogue files of at least one information system according to at least one classification criterion. The cross-referencer generates links in a portion of the catalogued files, wherein each generated link is a hyperlink to a listing of catalogued files associated with a selected classification criterion. The publisher generates the listing for the selected classification criterion, and provides access to the catalogued files via hyperlinks. The present invention includes a cataloguing method as well.

## Description

### FIELD OF THE INVENTION

The present invention relates to cataloguing and publishing systems and methods generally.

### BACKGROUND OF THE INVENTION

Managing information is essential in businesses and organizations today. Important data, documents, images and other information are typically stored in a wide variety of systems such as databases, file servers and archival systems. Sometimes the business object of interest is the information itself in its original format, such as images and documents. Sometimes the business object of interest is the output of a particular action on the information, such as a report or the result of a database query. Since a business generally owns separate, incompatible computerized systems, it is difficult to present the business information contained therein in such a way that a user can easily access the information when needed from across the organization.

Many businesses and organizations have chosen to connect their information systems and user terminals in an Intranet, and to provide partial access to those information systems via an application running inside a browser. Browser-based applications have a familiar look and feel to users who have navigated on the World Wide Web, and therefore they are quickly and easily implemented.

One currently available solution is an agent which accesses multiple relational databases so that a user can use a browser to navigate a selected portion of the data stored therein. This technology requires complex integration and can be costly to implement. Furthermore, it does not provide access to information stored in systems other than relational databases.

Another currently available solution is net searchers, which search directories and servers by free text provided by a user. Files are catalogued with keywords, and the net searcher produces a listing of all files whose keywords match the free text. Navigation from one file to another is achieved only by returning to the listing. This solution does not provide access to data stored in relational databases. Furthermore, free text searches are inaccurate. A user searching for files related to billiards might use the keyword "pool" and the net searcher will produce a listing of files related to billiards and files related to swimming pools and files related to betting pools.

A further solution is to use an HTML page linker which executes queries on various relational databases. The integration of information resulting from the queries is minimal. This solution does not provide access to information stored in systems other than relational databases.

A further disadvantage to the solutions described hereinabove is that the information is presented to the user as is, without any further analysis.

### SUMMARY OF THE INVENTION

An object of the present invention is to provide an Intranet-based cataloguing and publishing system and method which provides access to information systems via a browser.

There is provided in accordance with a preferred embodiment of the present invention a cataloguing system including a manager, a cross-referencer, and a publisher. The manager enables a system administrator to catalogue files of at least one information system according to at least one classification criterion. The cross-referencer generates links in a portion of the catalogued files, wherein each generated link is a hyperlink to a listing of catalogued files associated with a selected classification criterion. The publisher generates the listing for the selected classification criterion, and provides access to the catalogued files via hyperlinks.

Moreover, in accordance with a preferred embodiment of the present invention, the manager includes means for defining presentation rules for the publisher which affect presentation of the at least one classification criterion in the portion of catalogued files.

Furthermore, in accordance with a preferred embodiment of the present invention, the manager includes a class definer for grouping the at least one classification criterion into classes such that classification criteria belonging to the same class share certain characteristics.

Additionally, in accordance with a preferred embodiment of the present invention, the manager includes an access controller. The access controller is used for defining an organizational structure, for defining users of the cataloguing system, for associating the catalogued files with points in the organizational structure, and for defining access by the users to the catalogued files.

Moreover, in accordance with a preferred embodiment of the present invention, the manager includes means for defining file-matching rules which are used by the publisher to generate a part of the listing.

Furthermore, in accordance with a preferred embodiment of the present invention, the manager includes a graphical cataloguer which enables a system administrator to graphically identify the selected classification criterion in at least one of the portion of catalogued files.

Additionally, in accordance with a preferred embodiment of the present invention, the manager includes an automatic cataloguer which searches the at least one of the portion of catalogued files for any term indicating appearance of a classification criterion in the at least one file.

Moreover, in accordance with a preferred embodiment of the present invention, the manager includes means for cataloguing files containing relational database queries by searching the files containing relational database queries for any term indicating appearance of a classification criterion in the result of the query.

There is provided in accordance with a preferred embodiment of the present invention a cataloguing method including the steps of cataloguing files of at least one information system according to at least one classification criterion and generating links in a portion of the catalogued files. Each generated link is a hyperlink to a listing of catalogued files associated with a selected classification criterion. The method also includes the step of generating the listing for the selected classification criterion, and providing access to the catalogued files via hyperlinks.

Moreover, in accordance with a preferred embodiment of the present invention, the method further includes the step of defining presentation rules which affect the presentation of the at least one classification criterion in the portion of catalogued files.

Furthermore, in accordance with a preferred embodiment of the present invention, the method further includes the step of grouping the at least one classification criterion into classes such that classification criteria belonging to the same class share certain characteristics.

Additionally, in accordance with a preferred embodiment of the present invention, the method further includes the steps of defining an organizational structure, defining users, associating said catalogued files with points in said organizational structure, and defining access by said users to said catalogued files.

Moreover, in accordance with a preferred embodiment of the present invention, the method further comprises the step of defining file-matching rules, and wherein the step of generating the listing utilizes the file-matching rules.

Furthermore, in accordance with a preferred embodiment of the present invention, the step of cataloguing includes the step of enabling a system administrator to graphically identify said classification criterion.

Additionally, in accordance with a preferred embodiment of the present invention, the step of cataloguing Includes the step of searching at least one of the portion of catalogued files for any term indicating appearance of a classification criterion.

### BRIEF DESCRIPTION OF THE DRAWINGS AND APPENDIX

The present invention will be understood and appreciated more fully from the following detailed description taken in conjunction with the appended drawings and appendix in which:
Fig. 1 is a schematic block-diagram illustration of an exemplary Intranet and a cataloguing and publishing system of the present invention;
Fig. 2 is a schematic illustration of a collection of classes, in tabular format;
Fig. 3A is a schematic illustration of an organizational structure;
Fig. 3B is a schematic illustration of a part of the organizational structure of Fig. 3A;
Fig. 4 is a schematic illustration of a sequence of hyperlinked static HTML (hypertext markup language) pages;
Fig. 5 is a schematic illustration of the types of business objects that can be catalogued;
Fig. 6 is a schematic flowchart illustration of a method for cataloguing reports;
Fig. 7 is a schematic illustration of a typical report;
Fig. 8 is a schematic illustration of a sequence of hyperlinked HTML pages;
Fig. 9 is a schematic flowchart of a method for cataloguing relational database queries;
Fig. 10 is a schematic illustration of two alternative presentations of the results of a database query; and

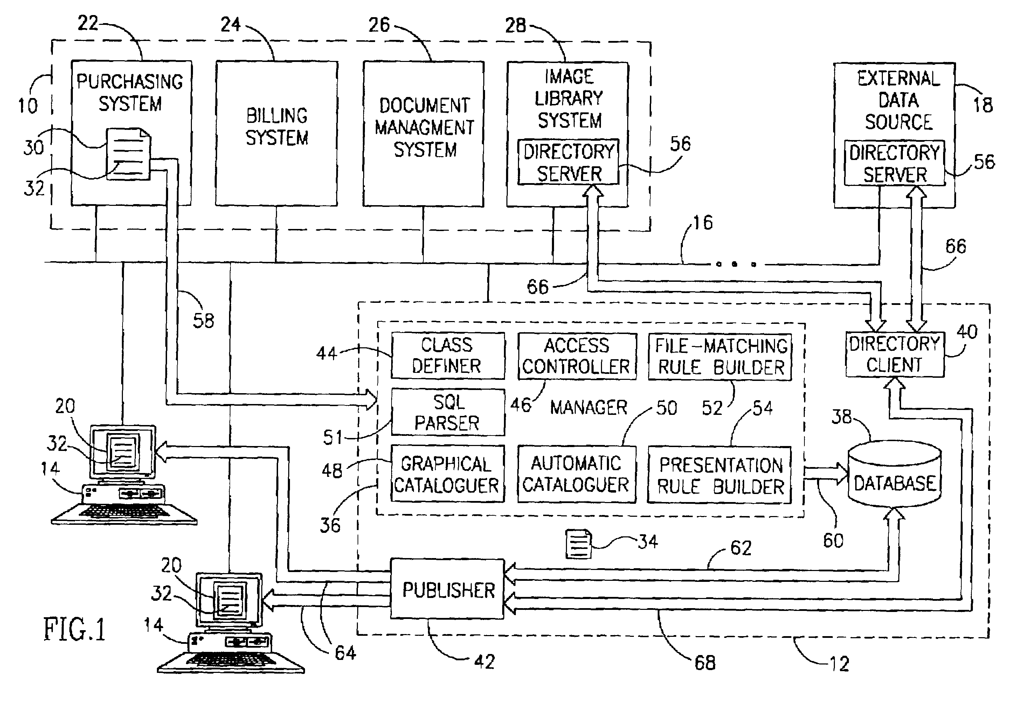

Appendix A lists the tables of the relational database of Fig. 1.

### DETAILED DESCRIPTION OF THE PRESENT INVENTION

The present invention is a system that enables business objects originating on any existing information system to be catalogued and viewed via a Web browser.

Reference is now made to Fig. 1, which is a schematic block-diagram illustration of an exemplary Intranet and a cataloguing and publishing system of the present invention. An organization has a collection 10 of existing information systems, a cataloguing and publishing system 12, and a plurality of user terminals 14, all connected to an Intranet 16. Business objects, such as reports, database queries, and documents, generated by the existing information systems or by external data sources 18 and stored as physical files, are registered with the cataloguing and publishing system 12, which publishes them to Web browsers 20 running on the user terminals 14. The collection 10 of existing information systems comprises, for example, a purchasing system 22, a billing system 24, a document management system 26 and an image library system 28.

The cataloguing and publishing system 12 functions partly similar to a card catalog of a library. Just as a library book can be catalogued separately by the title, author and subject of the book, a physical file 30, which contains a report 32 produced by the purchasing system 22, can be catalogued by the purchased parts and customers which appear in the report 32. Just as a catalog card in a library specifies on which bookshelf to find the book, the cataloguing and publishing system 12 records the location of the file 34 containing the report 32 converted into HTML (hypertext markup language) format. In a library, one has to walk to the bookshelf and take the book from the shelf in order to read it. In contrast, the cataloguing and publishing system 12 publishes the report 32 directly to the Web browser 20 on a user terminal 14.

The cataloguing and publishing system 12 is an HTTP (hypertext transfer protocol) server that comprises a manager 36, a relational database 38, a directory client 40, and a publisher 42.

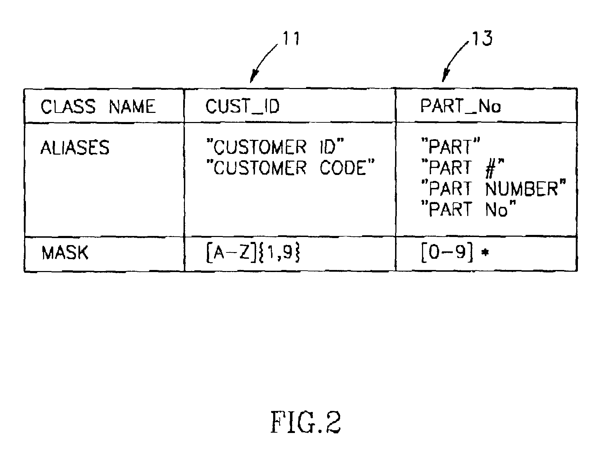

The manager 36 comprises a class definer 44, an access controller 46, a graphical cataloguer 48, an automatic cataloguer 50, an SQL parser 51, a file-matching rule builder 52, and a presentation rule builder 54. These elements, along with the directory client 40 and directory servers 56, will be described in more detail hereinbelow with respect to Figs. 2 - 10.

The system administrator uses the class definer 44 to define the classification criterion, known as classes. For example, classes related to purchased parts and customers are defined. This is shown in Fig. 2, to which reference is now briefly made, which illustrates a collection of classes, in tabular format. A class is characterized by a class name, a set of aliases, and a set of masks. A class 11 has the name "CUST_ID", the aliases "Customer ID" and "Customer Code", and the mask "[A-Z]{1,9}", which indicates that values of the class "GUST_ID" are strings of 1-9 characters, all of which are capital letters. A class 13 has the name "PART_No", the aliases "part", "part number", "part #" and apart no,", and the mask "[0-9]*", which indicates that values of the part number are numbers. The mask uses the UNIX definition of regular expression in order to identify class values and filenames.

Referring back to Fig. 1, the system administrator uses the manager 36 to catalogue the physical file 30, as indicated by information flow line 58, by specifying the particular class values of purchased parts and customers appearing in the report 32. The classification data of the report 32 is stored in the relational database 38, as indicated by information flow line 60. The tables of the relational database 38 are given in Appendix A. The report 32 is converted to HTML format and stored in the cataloguing and publishing system 12 as the HTML file 34.

The publisher 42 publishes catalogued business objects for viewing via a Web browser 20 on a user terminal 14. The publisher 42 provides the Web browser 20 with an HTML page, in which a hyperlink reference to a catalogued business object appears. For example, a hyperlink reference to report 32 may appear in the HTML page in the Web browser. The publisher 42 defines the hyperlink based upon information it requests from the relational database 38, as indicated by information flow line 62. When a user follows the hyperlink, the publisher 42 sends the HTML file 34 to the Web browser 20, as indicated by information flow line 64.

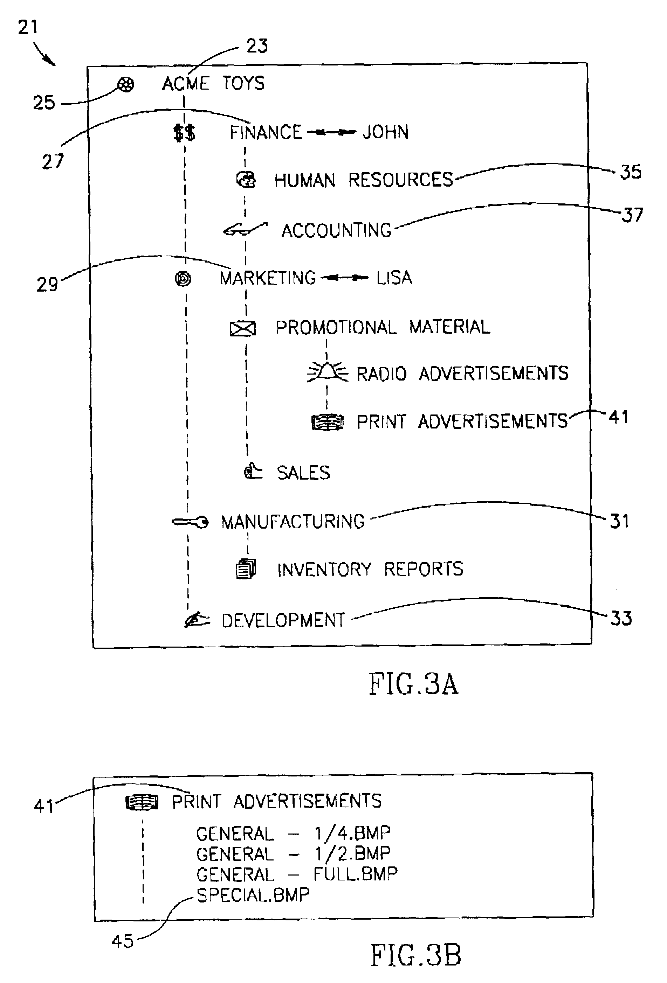

The system administrator uses the access controller 46 to define an organizational structure, users and access control. This is shown in Fig. 3A, to which reference is now made, which is a schematic illustration of an organizational structure, represented as an organizational folder tree (OFT) 21. The OFT 21 is a tree of folders, each of which may contain additional folders or business objects or both. Each folder is characterized in the relational database 38 (Fig. 1) by a visual name 23, a description, and an icon 26, which the user clicks in order to open and close the folder. The top folder whose visual name 23 is Acme Toys, contains a Finance folder 27, a Marketing folder 29, a Manufacturing folder 31, and a Development folder 33. Similarly, the Finance folder 27 contains a Human Resources folder 35 and an Accounting folder 37. In a preferred embodiment of the present invention, the OFT 21 is implemented as a directory tree, where the folders are directories, and the business objects are files.

For each user, the system administrator specifies from which folder of the OFT 21 downward the tree is visible and accessible to the user. For example, for John, the Financial Manager of Acme Toys, only the sub-tree beginning with the Finance folder 27 is visible and accessible. For Lisa, the Marketing Manager of Acme Toys, only the sub-tree beginning with the Marketing folder 29 is visible and accessible.

When business objects are catalogued, they are also associated with positions on the OFT 21. Reference is now briefly made to Fig. 3B, which is a schematic illustration of a sub-tree of the OFT 21 of Fig. 3A. A Print Advertisements folder 41 contains four image files 43. The image files 43 are the business objects associated with the Print Advertisements folder 41.

For each folder of the OFT 21, the system administrator defines whether the business objects associated with it are pushable for a particular user. A user can choose to download, or push, an entire sub-tree of the OFT 21. This will copy the structure of the sub-tree and all the user-pushable business objects associated with the folders of the sub-tree, to an external device such as the hard disk of a laptop or other remote machine, for offline navigation. When the user opens a folder in the copy of the sub-tree, only user-pushable business objects will be visible and accessible. The system administrator decides, for example, that only the image file 45 whose visual name is "special.bmp" is pushable for the user Lisa. Therefore, in Lisa's private copy of the Print Advertisements folder 41, all four image files 43 will be listed, but it will be possible to view only the image file 45 "special.bmp".

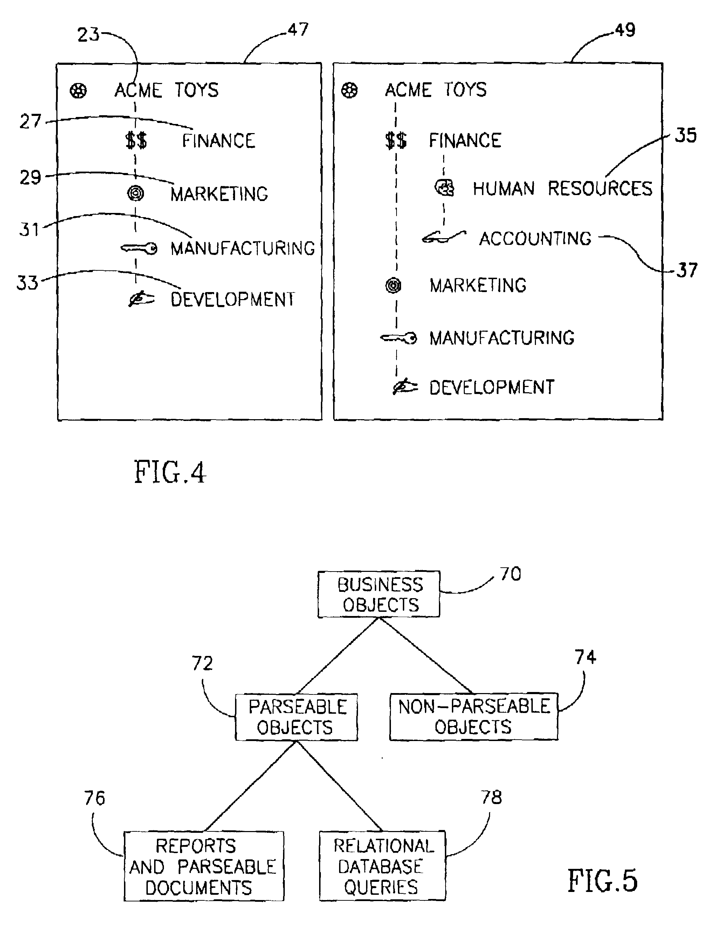

The publisher 42 (Fig. 1) generates static HTML pages that represent the organizational structure, so that a user may navigate to the business objects of interest. This is shown in Fig. 4, to which reference is now made, which is a schematic illustration of a series of hyperlinked static HTML pages. For example, the user may open the Web browser 20 (Fig. 1) to an HTML page 47 which lists only the Acme Toys folder 23, and the next level in the organizational structure, consisting of the Finance folder 27, the Marketing folder 29, the Manufacturing folder 31 and the Development folder 33. By clicking on a hyperlink to the Finance folder 27, an HTML page 49 is presented which lists all the folders of the previous HTML page 47, as well as the next level in the organizational structure under the Finance folder 27, namely the Human Resources folder 35 and the Accounting folder 37.

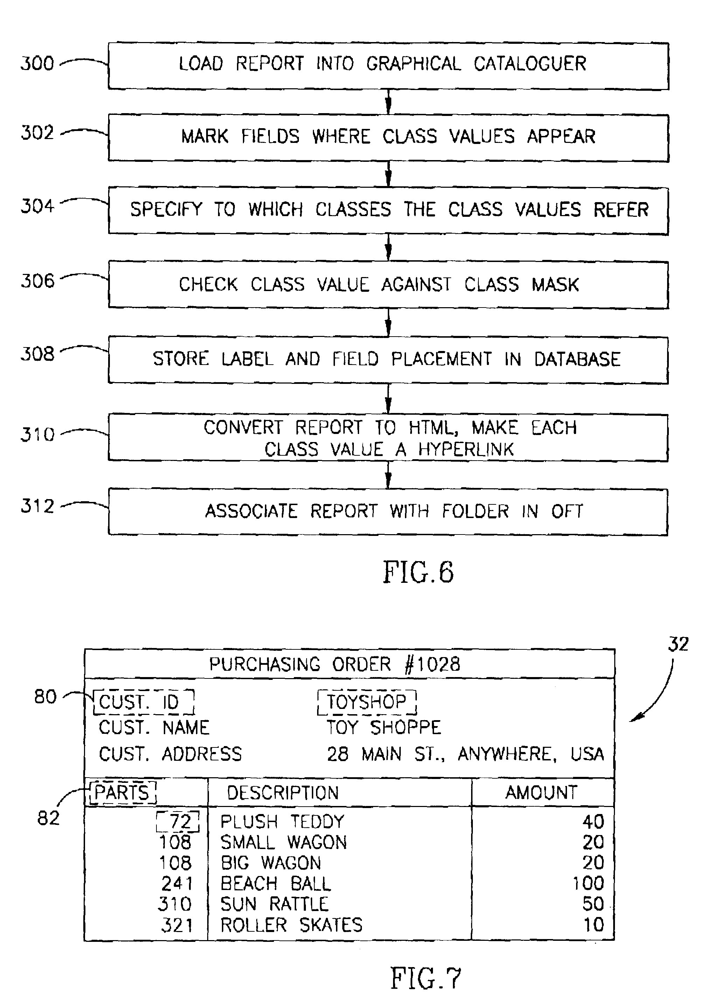

Referring back to Fig. 1, the system administrator uses the manager 36 to catalogue business objects. The types of business objects that can be catalogued are illustrated in Fig. 5, to which reference is now additionally made. Business objects 70 can be divided into two groups; parseable business objects 72, which are catalogued using the graphical cataloguer 48 (Fig. 1) or automatic cataloguer 50 (Fig. 1), and non-parseable business objects 74, which are catalogued using the file-matching rule builder 52 (Fig. 1). Examples of non-parseable business objects 74 are images, queries of non-relational databases, audio files, and video files. The parseable business objects 72 can be further subdivided into two groups: reports and parseable documents 76, and relational database queries 78.

The process of cataloguing reports with the graphical cataloguer 48 of Fig. 1 is shown in Fig. 6, to which reference is now made. Fig. 6 is a schematic flowchart of a method for cataloguing reports. Reference is made additionally to Fig. 7, which illustrates a typical report, for example the report 32 produced by the purchasing system 22 as in Fig. 1. The system administrator loads (step 300) the report 32 into the graphical cataloguer 48 (Fig. 1). The system administrator then marks (step 302) the report visually to identify fields where class values appear. The system administrator marks the label 80 "Cust. ID", the class value "TOYSHOP", the label 82 "Parts", and the class value "72". Note that only one of the values for the class "PART_No" is marked.

The system administrator also specifies (step 304) to which classes the labels and class values refer. For example, the label 80 "Cust. ID" and the value "TOYSHOP" refer to the "CUST_ID" class. The label 82 "Parts" and the value "72" refer to the "PART_No" class. The class value is checked (step 306) against the mask defined for the class. For example, it is checked that the value "TOYSHOP" has the format of 1-9 capital letters. It is checked that the value "72" is a number.

The graphical cataloguer 48 (Fig. 1) stores (step 308) in the relational database 38 (Fig. 1) the label of the field as one of the aliases for the class, and various placement characteristics of the field in the report. For example, the label 80 "Cust. ID" is added to the list of aliases for the class "CUST_ID". The class value "72" is stored as well in the relational database 38 as classifying the report 32.

The graphical cataloguer 48 (Fig. 1) is written in the Java language. For example, the report 32 is read into a text area field widget, and the system administrator may adjust the properties of the widget. The graphical cataloguer 48 uses AWT (Abstract Window Toolkit) classes to enable the system administrator to mark the report 32. The system administrator is prompted by the graphical cataloguer 48 to select a class from a list, to mark the field label corresponding to that class, and to mark a class value corresponding to that class. Then the graphical cataloguer 48 determines at what line and column the label appears, whether the class value is above, below, to the left or to the right of the label, and how many lines and/or spaces are between the label and the class value. The system administrator is prompted to specify whether the class value field is repeatable, i.e. whether more than one class value is listed. If it is repeatable, then the graphical cataloguer 48 checks the text in the vicinity of the marked class value to see if it matches the class mask. If so, then the new class value is stored as well in the relational database 38. This process of looking in the vicinity of the latest repeatable class value for new class values is repeated until text is found which does not match the class mask nor a known class alias.

The report is converted (step 310) to HTML format, and each class value becomes a hyperlink to a list of all business objects with the same class value. The items in the list are hyperlinks to the actual business objects. When the user follows a hyperlink of an item in the list, the business object is published with the focus on the class value.

The system administrator associates (step 312) the report's HTML file with a folder in the OFT 21. A pointer to the HTML file is stored in the folder with which the report is associated. Reports can be associated with more than one folder in the OFT 21. The HTML file is stored only once, and additional associations are stored as pointers to the HTML file.

Referring back to Fig. 1, once enough aliases have been recorded in the relational database 38, the system administrator can catalogue reports by using the automatic cataloguer 50 to parse the report for occurrences of aliases. The automatic cataloguer 50 searches the text of the report for words or phrases that match stored aliases in the relational database 38. If an alias is found in the report, then the automatic cataloguer 50 searches below, above, to the left and to the right of the alias text to see whether it identifies text of a class value. Only text which matches existing class values that have already been stored in the relational database 38 are accepted. In that case, the class value is stored in the relational database 38 as classifying the report. Furthermore, various placement characteristics of the field (e.g. line and column) are automatically stored in the relational database 38. The search for additional class values for the case of a repeatable field is done as described hereinabove regarding the graphical cataloguer 48.

Referring back to Fig. 1, when a report 32 is catalogued, the system administrator must specify the frequency with which the generating information system (one of the collection 10) generates new reports. The address of the file 30 containing the generated report 32 (i.e. the server name, directory and filename) must be given. If the generating information system is HTTP-accessible, then the generating information system may transfer the file 30 to the cataloguing and publishing system 12 for cataloguing using the "PUT" command of the HTTP protocol. Otherwise, the generating information system must transfer the file 30 using the "FTP" command of the TCP/IP protocol.

Parseable documents such as Word and ASCII files are catalogued with a method identical to that described hereinabove in Fig. 6.

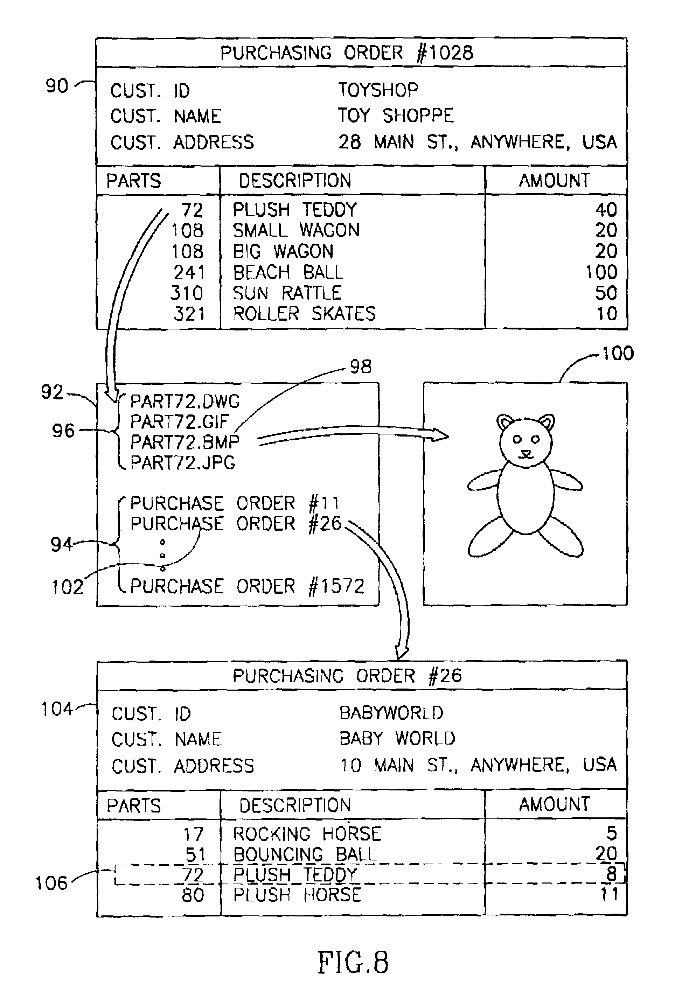

As was mentioned hereinabove, when a catalogued report is converted to HTML format, each class value becomes a hyperlink to a list of all catalogued or rule-related business objects matching the same class value. Reference is now made to Fig. 8, which Is a schematic illustration of a sequence of hyperlinked HTML pages. The HTML page 90 contains the purchase order #1028 report of Fig. 7. When a user follows the hyperlink "72", a new HTML page 92 is displayed. The HTML page 92 lists all catalogued business objects registered with the class value "72" for the class "PART_No". The HTML page 92 is generated dynamically by the publisher 42 (Fig. 1). The list includes all purchase orders 94 in which part 72 appears, and all files 96 which describe part 72. The items listed in the HTML page 92 are hyperlinks themselves. When the user follows a hyperlink 98 for the file *"part72.bmp",* a new HTML page 100 is published with the image of the file "*part72.bmp*", showing a picture of the plush teddy bear. When the user follows a hyperlink 102 for purchase order #26, the purchase order #26 is published as an HTML page 104. The HTML page 104 is published with the focus on a part 106 of the page where the class value "72" appears.

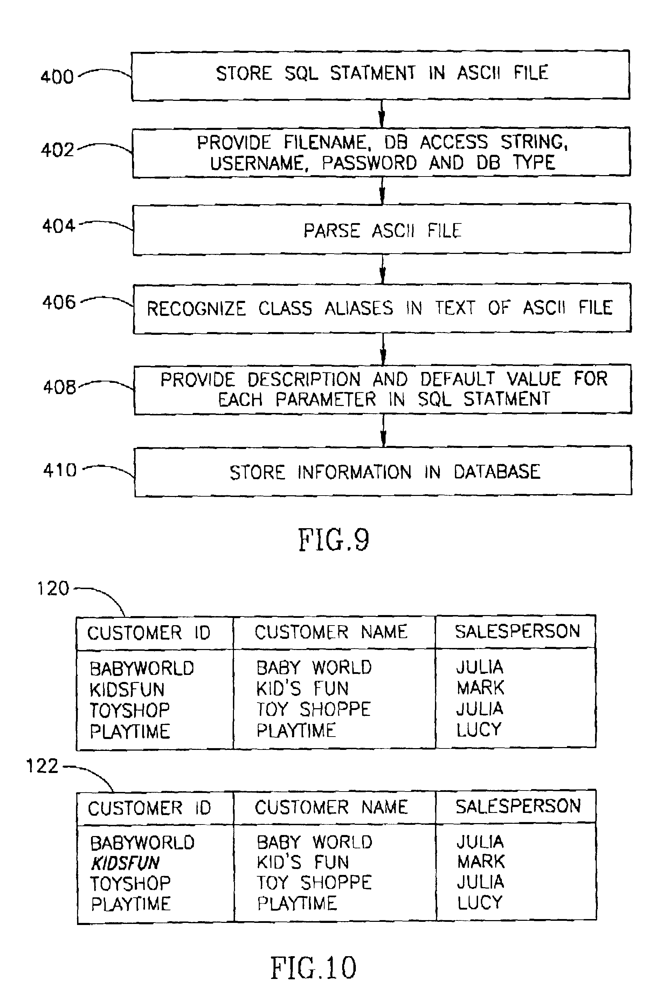

The process of cataloguing relational database queries with the SQL parser 51 of Fig. 1 is shown in Fig. 9, to which reference is now made. Fig. 9 is a schematic flowchart of a method for cataloguing relational database queries. A valid database query in SQL or PL/SQL is stored (step 400) in an ASCII file. The system administrator provides (step 402) the name of the file, the database access string, a username and password for accessing the database, and the type of database (e.g. Ingres, Oracle, SQL Server, Sybase, ...). The SQL parser 51 parses (step 404) the text of the ASCII file, checking the database dictionary to verify that the SQL statement contained in the file is valid. The SQL parser 51 also recognizes (step 406) class aliases in the text. For example, "Customer Code" is an alias for the "CUST_ID" class. For each parameter appearing in the query, the system administrator provides (step 408) a description and a default value for each parameter appearing in the query. For example, when the SQL statement
SELECT CUST_NAME, ADDRESS, CUST_ID
FROM CUSTOMERS
WHERE CUST_NAME LIKE '&1%';
is catalogued, the system administrator provides the SQL parser 51 with the description "beginning of customer name" and default value "A" for the parameter "&1". The SQL parser 51 then stores (step 410) the relevant information in the relational database 38.

When a user opens a database query object with parameters, an HTML form prompts the user to enter parameter values. To continue the example given above, the HTML form will have a label "beginning of customer name" and an editable field with an "A" already appearing in it.

When the database query result is produced, an HTML page is published, with all the class values as hyperlinks to a list of all business objects with the same class value. Just as in the case of reports, the items in this list are hyperlinks to the business objects themselves. When the user follows an business object hyperlink, the business object is published with the focus on the class value.

The system administrator uses the file-matching rule builder 52 (Fig. 1) to build file-matching rules specifying where and how to locate registered objects. Non-parseable business objects 74 (Fig. 5), such as images, audio, video, CAD/CAM files, and non-relation database queries, can be catalogued via file-matching rules. A file-matching rule describes how to identify non-parseable files as being related to specific class values. The system administrator defines any number of file-matching rules for each class as a whole, or for each class value individually.

An example of a file-matching is that on the server where the document management system 26 (Fig. 1) is running, all files in the directory *"C:\drawings\"* whose filename has the format "*part*.dwg*", where * is any number, are registered for the class "PART_No". The class value is the number appearing in the filename. So the file *"part34.dwg"* is registered as classified by "34" for the class "PART_No", and the file "*part186.dwg*" is registered as classified by "186" for the class "PART_No". This Is an example of a file-matching rule for a class as a whole. This can be seen in Fig. 8, where the HTML page 92 lists all catalogued business objects registered with the class value "72" for the class "PART_No". The list includes all purchase orders 94 in which part 72 appears, and all files 96 which describe part 72. One of the files is *"part72.dwg",* and it appears in the list because it satisfies the file-matching rule defined in the example hereinabove.

An example of a file-matching rule for particular class values is that on a remote server with a non-relational database, the file with the name "*query1.txt*" is registered for the class "CUST_ID" with the values "TOYSHOP" and "BABYWORLD".

Some applications give files standard filenames, such as *"Document1.doc", "Document2.doc*", or "*1.prt*", *"2.prt", "3.prt",* etc., which do not identify the content of the files. Such applications generally provide an additional file, which contains file descriptors. A file descriptor designates, for example, that the file "*1.prt*" is related to the class "PART_No" for values 782 - 796. A file-matching rule will check for files with matching filenames and files with matching file descriptors.

Referring back to Fig. 1, a directory server 56 is located on each existing information system that generates non-parseable business objects. The directory client 40 requests and receives directory services from the directory servers 56, as indicated by information flow lines 66. When the publisher 42 wants to know which non-parseable files on an existing information system are catalogued according to a particular class value, it communicates with the directory client 40, as indicated by information flow line 68, which in turn asks the directory server 56 for files satisfying to a file-matching rule. The directory server 56 sends the list of matching files back to the directory client 40, which passes it on to the publisher 42.

The directory servers 56 and directory client 40 communicate using the Berkeley sockets (BSD) protocol, which is well known in the art.

The system administrator uses the presentation rule builder 54 (Fig. 1) to define presentation rules that affect the presentation of registered objects to the user. A presentation rule is a control that causes a class value contained in a business object to be emphasized, when the class value belongs to a pre-defined set. The class value is emphasized in the published business object by giving it specific format properties, such as font, color and size. It will be appreciated that any combination of formatting tags in HTML can be used.

This is shown in Fig. 10, to which reference is now made, which is a schematic illustration of two alternative presentations of the results of a database query. Two HTML pages 120 and 122 display the name of the salesperson for each customer. When HTML page 120 is displayed, there is no presentation rule regarding the class "CUST_ID", and each customer ID is presented in the same format. When HTML page 122 is displayed, there is a presentation rule that has the effect that whenever a customer's debt exceeds $1000, each occurrence of that customer's ID in published reports, documents and query results is displayed in bold italic format. The customer Kid's Fun, whose customer ID is "KIDSFUN", has a debt exceeding $1000, so its customer ID is presented in bold italic format.

The set of class values to which the presentation rule applies is either the result of a database query, or the output of an external program, or the contents of a file. Referring back to Fig. 1, before the publisher 42 publishes an HTML page containing class values to a Web browser 20, it checks the relational database 38 to see whether a presentation rule exists for each class having class values in the HTML page. If the class values in the HTML page are relevant to the presentation rule, then their format properties are changed according to the presentation rule.

It will be appreciated that the system administrator can define at most one presentation rule per class, since more than one rule would lead to possibly inconsistent formatting properties.

Another feature of a preferred embodiment of the present invention is that in the listing of business objects catalogued by a particular class value, the user can see which of those listed business objects contain class values to which presentation rules apply.

An additional feature of the present invention is the history utility. In a preferred embodiment of the present invention, a user can record a listing of the most recent HTML pages accessed using the cataloguing and publishing system. The next time the user uses the cataloguing and publishing system, the listing of those same HTML pages is produced, and the user can access them again. It will be appreciated that the content of dynamic HTML pages may have changed since the user last accessed them; the user will now see the current content of the HTML pages.

It will be appreciated by persons skilled in the art that the present invention is not limited by what has been particularly shown and described herein above. Rather the scope of the invention is defined by the claims that follow the appendix.

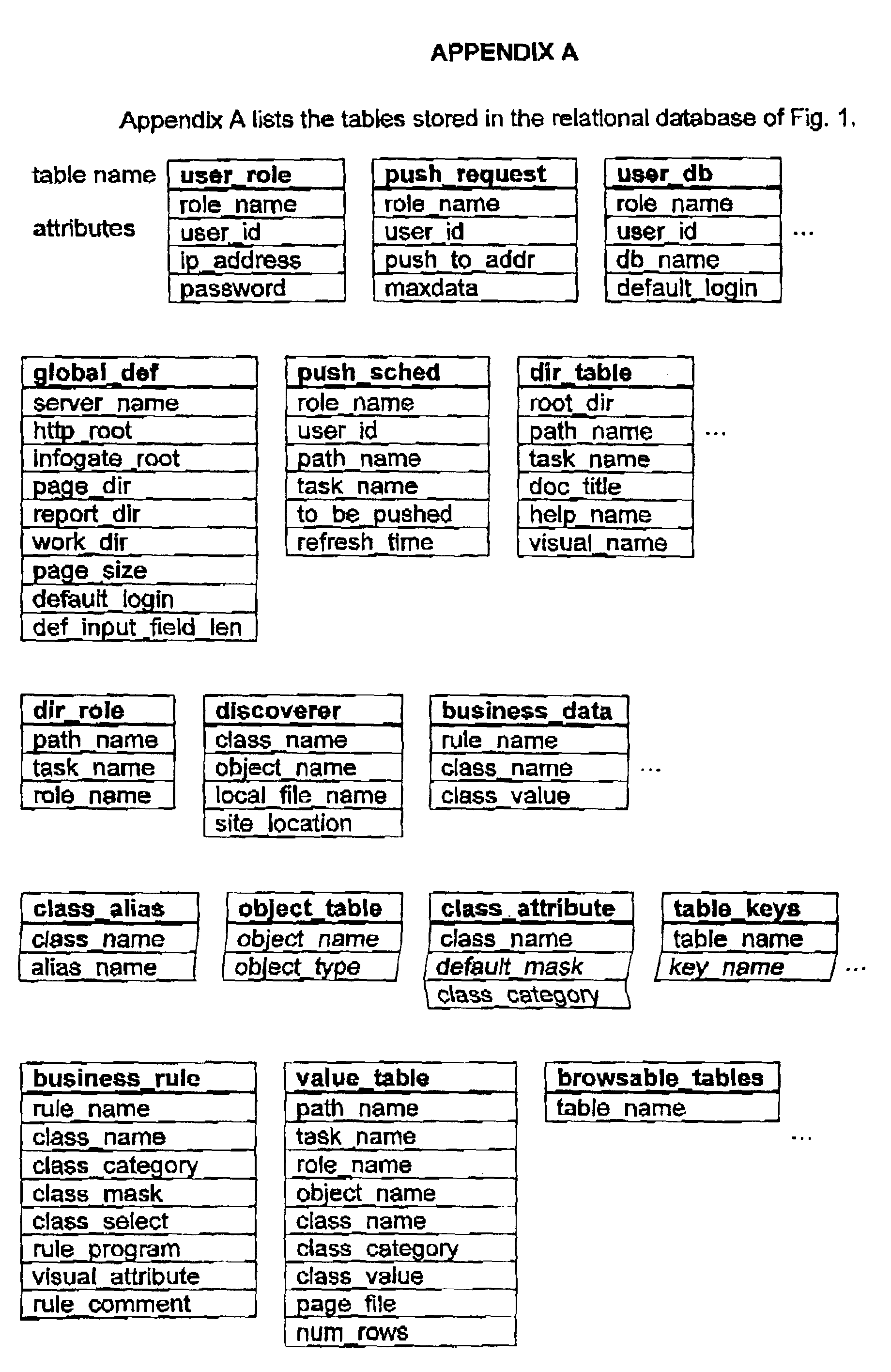

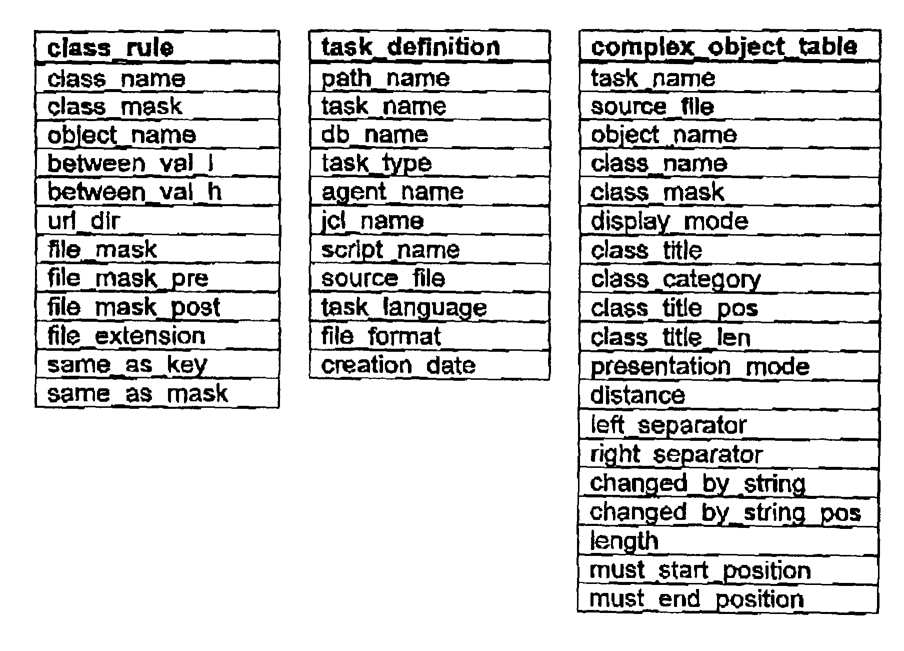

## Claims

1. A cataloguing system comprising:
a manager for enabling a system administrator to catalogue files of at least one information system according to at least one classification criterion;
a cross-referencer for generating links in a portion of said catalogued files, wherein each said generated link is a hyperlink to a listing of catalogued files associated with a selected classification criterion; and
a publisher for generating said listing for said selected classification criterion, and for providing access to said catalogued files via hyperlinks.

2. A cataloguing system according to claim 1, wherein said manager includes means for defining presentation rules for said publisher which affect presentation of said at least one classification criterion in said portion of catalogued files.

3. A cataloguing system according to claim 1, wherein said manager includes a class definer for grouping said at least one classification criterion into classes such that classification criteria belonging to the same class share certain characteristics.

4. A cataloguing system according to claim 1, wherein said manager includes an access controller for defining an organizational structure, for defining users of said cataloguing system, for associating said catalogued files with points in said organizational structure, and for defining access by said users to said catalogued files.

5. A cataloguing system according to claim 1, wherein said manager includes means for defining file-matching rules which are used by said publisher to generate a part of said listing.

6. A cataloguing system according to claim 1, wherein said manager includes a graphical cataloguer which enables a system administrator to graphically identify said selected classification criterion in at least one of said portion of catalogued files.

7. A cataloguing system according to claim 1, wherein said manager includes an automatic cataloguer which searches said at least one of said portion of catalogued files for any term indicating appearance of a classification criterion in said at least one file.

8. A cataloguing system according to claim 1, wherein said manager includes means for cataloguing files containing relational database queries by searching said files containing relational database queries for any term indicating appearance of a classification criterion in the result of said query.

9. A cataloguing method comprising the steps of:
cataloguing files of at least one information system according to at least one classification criterion;
generating links in a portion of said catalogued files, wherein each said generated link is a hyperlink to a listing of catalogued files associated with a selected classification criterion;
generating said listing for said selected classification criterion; and
providing access to said catalogued files via hyperlinks.

10. A cataloguing method according to claim 9, wherein said method further comprises the step of defining presentation rules which affect the presentation of said at least one classification criterion in said portion of catalogued files.

11. A cataloguing method according to claim 9, wherein said method further comprises the step of grouping said at least one classification criterion into classes such that classification criteria belonging to the same class share certain characteristics.

12. A cataloguing method according to claim 9, wherein said method further comprises the steps of:
defining an organizational structure;
defining users;
associating said catalogued files with points in said organizational structure; and
defining access by said users to said catalogued files.

13. A cataloguing method according to claim 9, wherein said method further comprises the step of defining file-matching rules, and wherein said step of generating said listing utilizes said file-matching rules

14. A cataloguing method according to claim 9, wherein said step of cataloguing includes the step of enabling a system administrator to graphically identify said classification criterion.

15. A cataloguing method according to claim 9, wherein said step of cataloguing includes the step of searching at least one of said portion of catalogued files for any term indicating appearance of a classification criterion.
